# EUROPÄISCHE PATENTANMELDUNG

(11) **EP 1 323 930 A1**
(43) Veröffentlichungstag der Anmeldung: **02.07.2003**
(21) Anmeldenummer: 02022344.2
(22) Anmeldetag: 08.10.2002
(51) Int. Cl.: F15B 15/14

(54) **Druckmittelzylinder mit einem formschlüssig befestigten Zylinderdeckel**

(30) Priorität: 19.12.2001 DE 10162527
(71) Anmelder: Rexroth Mecman GmbH, 30453 Hannover (DE)
(72) Erfinder: Meyer, Heinz-Hermann, 30926 Seelze (DE); Kröger, Dirk, 30880 Laatzen (DE); Adolph, Dietmar, 31515 Wunstorf (DE); Möller, Rudolf, 30989 Gehrden (DE)
(74) Vertreter: Maiwald Patentanwalts GmbH

(57) **Zusammenfassung**

Druckmittelzylinder zur Erzeugung einer mechanischen Kraft über eine Druckmittelbeaufschlagung eines in einem Zylindergehäuse (1) angeordneten Kolbens (3), von dem aus eine Kolbenstange (4) abgeht, die abgedichtet mindestens einen Zylinderdeckel (2) durchdringt, wobei zur formschlüssigen Befestigung am Zylindergehäuse (1) der mindestens eine Zylinderdeckel (2) eine Teilnut (11b) aufweist, die mit einer gegenüberliegenden Teilnut (11a) am Zylindergehäuse (1) unter Bildung einer umlaufenden Befestigungsnut korrespondiert, in welcher ein Wurmfederelement (12) eingeschoben ist, wobei zum Einschieben des Wurmfederelements (12) ein von der Außenoberfläche (16) zur Befestigungsnut unter einem Winkel im Bereich zwischen 0° bis 90° bezüglich einer Tangentiallinie (17) verlaufender Kanalabschnitt (18) vorgesehen ist, so dass das Wurmfederelement (12) sich aufgrund seiner Vorspannung nach dem vollständigen Einschieben an den gekrümmten Verlauf der Befestigungsnut anpassend zurückfedert.

## Beschreibung

Die vorliegende Erfindung betrifft einen Druckmittelzylinder zur Erzeugung einer mechanischen Kraft über eine Druckmittelbeaufschlagung eines in einem Zylindergehäuse angeordneten Kolbens, von dem aus eine Kolbenstange abgeht, die abgedichtet mindestens einen Zylinderdeckel durchdringt, wobei zur formschlüssigen Befestigung am Zylindergehäuse der mindestens eine Zylinderdeckel eine Teilnut aufweist, die mit einer gegenüberliegenden Teilnut am Zylindergehäuse unter Bildung einer umlaufenden Befestigungsnut korrespondiert, in welcher als Verbindungselement ein Wurmfederelement eingeschoben ist.

Druckmittelzylinder der hier interessierenden Art können mit einem hydraulischen Druckmittel oder mit einem pneumatischen Druckmittel beaufschlagt werden. Die Druckmittelzylinder werden in vielen Industriebereichen als Antriebseinheit zur Erzeugung einer Kraft eingesetzt, wie in der Automatisierungstechnik oder in der Fahrzeugtechnik.

Aus der US 5,651,303 ist ein Druckmittelzylinder bekannt, dessen Zylinderdeckel durch eine formschlüssige Verbindung am Zylindergehäuse gehalten ist. In einer Variante (Fig. 7) wird ein zusätzliches Verbindungsmittel in Form eines Halterings hierfür verwendet. Der Zylinderdeckel ist mit einem angeformten Flansch teilweise in die Öffnung des Zylindergehäuses eingeschoben. Außenradial am Flansch ist eine Teilnut vorgesehen, welche mit einer gegenüberliegend, innenradial am Zylindergehäuse vorgesehen korrespondierenden Teilnut unter Bildung einer umlaufenden Befestigungsnut zur Aufnahme des Halterings zusammenwirkt. Der Haltering füllt den Querschnitt der Befestigungsnut fast vollständig aus, so dass eine Relativbewegung zwischen dem Zylindergehäuse und dem Zylinderdeckel verhindert wird. Zur Montage des Zylinderdeckels wird der im Querschnitt V-förmige Haltering in die außenradiale Teilnut am Flansch eingelegt. Nachfolgend wird der Zylinderdeckel endseitig in das Zylindergehäuse eingeschoben, bis der V-förmige Haltering in der innenradialen Teilnut am Zylindergehäuse auffedert, so dass eine zuverlässige formschlüssige Verbindung entsteht.

Ein Nachteil dieser Lösung ist jedoch, dass diese Verbindung nur unter Zerstörung des Druckmittelzylinders wieder demontierbar ist, da der V-förmige Haltering nach dem Auffedern nicht wieder zusammendrückbar ist.

Aus der DE 198 05 480 A1 geht eine andere formschlüssige Befestigung eines Zylinderdeckels am Zylindergehäuse hervor, welche sich ebenfalls eines zusätzlichen Verbindungselements bedient und gegenüber der vorstehend vorgestellten Lösung wieder demontierbar ist. Auch hier existiert eine aus zwei korrespondierenden Teilnuten gebildete Befestigungsnut. In die Befestigungsnut wird von außen her über eine Öffnung an der Außenoberfläche des Druckmittelzylinders ein Wurmfederelement eingeschoben. Das Wurmfederelement erfüllt dieselbe Funktion wie der Haltering in der vorstehend vorgestellten Lösung. Ein Wurmfederelement ist ein längliches, stangenförmiges Federelement, welches im entspannten Zustand geradlinig verläuft. Der Querschnitt des Wurmfederelements ist dem Querschnitt der Befestigungsnut angepasst. Das Wurmfederelement wird tangential in die Befestigungsnut eingeschoben. Nach dem vollständigen Einschieben wird die Öffnung an der Außenoberfläche des Druckmittelzylinders durch eine Vergießmasse versiegelt, um eine Verliersicherung für das Wurmfederelement zu bilden. Ein Entfernen des Wurmfederelements und damit eine Demontage des Zylinderdeckels vom Zylindergehäuse ist erst nach einem Erwärmen der Vergießmasse und deren Entfernen möglich. Dieses fordert zusätzliche Arbeitsschritte, welche einen erhöhten Arbeitsaufwand verursachen.

Es ist daher die Aufgabe der vorliegenden Erfindung einen Druckmittelzylinder mit einer formschlüssigen Zylinderdeckelbefestigung dahingehend weiterzuverbessern, dass das hierbei verwendete Verbindungselement auf einfache Weise gegen Verlieren gesichert ist und sich auch auf einfache Weise aus der Befestigungsnut entfernen lässt.

Die Aufgabe wird ausgehend von einem Druckmittelzylinder gemäß dem Oberbegriff des Anspruchs lin Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zum Einschieben eines als Wurmfederelement ausgebildeten Verbindungelements in eine Befestigungnut ein von der Außenoberfläche zur Befestigungsnut unter einem Winkel im Bereich zwischen 5°-90° bezüglich einer Tangentiallinie verlaufender Kanalabschnitt vorgesehen ist, so dass das Wurmfederelement aufgrund seiner Vorspannung nach dem vollständigen Einschieben an den gekrümmten Verlauf der Befestigungsnut anpassend zurückfedert.

Der Vorteil der erfindungsgemäßen Lösung besteht insbesondere darin, dass keine zusätzlichen Mittel zur Verliersicherung - wie beispielsweise eine Vergießmasse, Sicherungsschrauben oder dergleichen - erforderlich sind. Die Verliersicherung funktioniert vollkommen formschlüssig, indem der Kanalabschnitt zum Einschieben des Wurmfederelements von außen her unter einem bestimmten Winkel zur Tangentiallinie der Befestigungsnut verläuft. Somit wird das Wurmfederelement durch eine gegengekrümmte Montage in die Befestigungsnut eingeschoben, so dass sich nach einem vollständigen Einschieben das Ende des Wurmfederelements an den Verlauf der Befestigungsnut durch Zurückfedern anpasst. Zum Entfernen des Wurmfederelements aus dieser Lage ist es lediglich erforderlich, das Ende des Wurmfederelements wieder in den Winkel des Kanalabschnitts zu biegen, wozu ein entsprechendes Werkzeug erforderlich ist. Eine selbsttätige Rückbewegung in den Kanalabschnitt ist wegen der Federeigenschaften des Wurmfederelements ausgeschlossen.

Um die gewünschten Federeigenschaften des Wurmfederelements herbeizuführen, ist dieses vorzugsweise nach Art einer Spiralfeder aus Federstahl ausgebildet. Alternativ hierzu ist es auch möglich, dass Wurmfederelement aus einem ein ausreichendes Krümmungs- und Federvermögen besitzendes Stangenmaterial herzustellen, wobei jedoch zu beachten ist, dass das Material eine ausreichende Festigkeit aufweist, so dass ein insoweit aus einem Vollprofil bestehendes Federelement nicht durch die beiden Teilnuten abgeschert wird. Die Abschergefahr besteht durch die beim Betrieb des Druckmittelzylinders austretenden Axialkräfte zwischen Zylindergehäuse und dem Zylinderdeckel. Das Wurmfederelement sollte einen Außendurchmesser aufweisen, der an den kreisförmigen Querschnitt der Befestigungsnut unter Wahrung einer Spielpassung angepasst ist, um zum Einen ein leichtgängiges Einschieben des Wurmfederelements in die Befestigungsnut zu gewährleisten und zum Anderen eine spielfreie Befestigung des Zylinderdeckels am Zylindergehäuse sicherzustellen.

Vorzugsweise ist der Kanalabschnitt unter einem Winkel von ca. 60° bezüglich der Tangentiallinie an der Befestigungsnut ausgerichtet. Bei diesem Winkel kann unter Berücksichtigung der Krümmung der Befestigungsnut sowohl ein leichtgängiges Einschieben des Wurmfederelements als auch eine ausreichende Verliersicherung durch Verhinderung einer selbsttätigen Rückbewegung erzielt werden.

Gemäß einer weitem die Erfindung verbessernden Maßnahme ist die Öffnung des Kanalabschnitts an der Außenoberfläche mittels eines hieran angebrachten Abdeckelements verschlossen, um ein Eindringen von Schmutz in die Öffnung zu verhindern. Ein Abdeckelement kann beispielsweise das Typenschild des Druckmittelzylinders sein, welches schwenkbar am Druckmittelzylinder angebracht ist, so dass die Öffnung des Kanalanschnitts durch eine Schwenkbewegung freilegbar ist. Das Abdeckelement kann auch über eine Klebverbindung am Druckmittelzylinder befestigt werden, wobei jedoch die Klebverbindung derart auszuführen ist, dass ein leichtgängiges Abziehen des Abdeckelements möglich ist, um die Öffnung des Kanalabschnitts freizulegen.

Die Länge des Wurmfederelements sollte geringfügig geringer als der Umfang der Befestigungsnut sein, so dass das Wurmfederelement fast vollständig entlang der Befestigungsnut verläuft, um die Belastbarkeit der formschlüssigen Verbindung zu maximieren. Somit wirkt das Wurmfederelement entlang des gesamten Umfangs der Befestigungsnut. Ein zu kurzes Wurmfederelement könnte eine ungleichmäßige Belastung der formschlüssigen Verbindung mit sich bringen.

Um eine geeignete Abdichtung des Zylinderdeckels gegenüber dem Zylindergehäuse herbeizuführen ist ein Dichtring vorgesehen, welcher in einer Nut an einem in das Zylindergehäuse hineinragenden Flansch des Zylinderdeckels angeordnet ist. Diese Nut für den Dichtring ist vorzugsweise benachbart zur innenliegenden Druckkammer des Druckmittelzylinders angeordnet.

Zusätzlich kann der Zylinderdeckel mit einer Verdrehsicherung versehen werden, um eine Verdrehung gegenüber dem Zylindergehäuse zu vermeiden. Die Verdrehsicherung umfasst vorzugsweise eine radialgerichtete, in das Zylindergehäuse eingeschraubte Sicherungsschraube, die in eine Umfangsnut am Flansch des Zylinderdeckels zum Eingriff kommt. Der Eingriff der Sicherungsschraube sollte im Öffnungsbereich der Umfangsnut zunächst formschlüssig erfolgen, wogegen die Sicherungsschraube bei einem weiteren Eindrehen in einen flankenseitigen verengten Nutgrundbereich materialverdrängend zum Eingriff kommt. Über diese Verdrehsicherung kann die Austrittsrichtung eines am Zylinderdeckel angeordneten Anschlusses zur Beaufschlagung des Druckmittelzylinders auf einfache Weise gewählt werden.

Weitere die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt.

Es zeigt:
- Fig. 1: einen Längsschnitt durch einen Druckmittelzylinder mit einer formschlüssigen Zylinderdeckelbefestigung,
- Fig. 2: eine Detaildarstellung im Schnitt A-A nach Fig. 1 mit teilweise eingeschobenem Wurmfederelement, und
- Fig. 3: eine Detaildarstellung im Schnitt A-A nach Fig. 1 mit vollständig eingeschobenem Wurmfederelement.

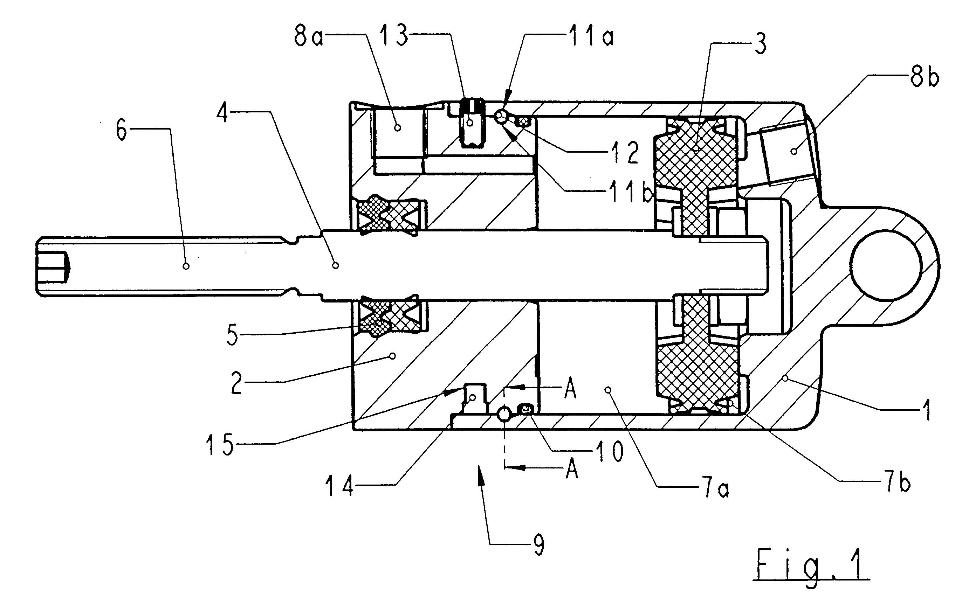

Der pneumatische Druckmittelzylinder gemäß Fig. 1 weist ein topfförmiges Zylindergehäuse 1 auf, welches an seinem offenen Ende mittels eines Zylinderdeckels 2 verschlossen ist. In dem hierdurch gebildeten Innenbereich des Druckmittelzylinders ist koaxial ein aus Vollgummi bestehender Kolben 3 mit Metalleinlage angeordnet. Am Kolben 3 ist über eine Schraubverbindung eine Kolbenstange 4 angebracht, die den Zylinderdeckel 2 über einen Dichtring 5 abgedichtet durchdringt. Das distale Ende der Kolbenstange 4 ist mit einem Gewindeabschnitt 6 versehen, mit dem der Druckmittelzylinder an weiterführende - hier nicht weiter dargestellte - Kraftübertragungsmittel gekoppelt ist.

Zur Krafterzeugung unterteilt der Kolben 3, welcher dichtend an der Innenwandung des Zylindergehäuses 2 zur Anlage kommt, den Innenbereich des Druckmittelzylinders in zwei Druckkammern 7a und 7b. Jeder Druckkammer 7a und 7b ist ein Druckmittelanschluss 8a bzw. 8b zugeordnet, über welchen eine wechselseitige Beaufschlagung des Kolbens 3 mit Druckluft erfolgt, um die Kolbenstange 4 hin und her zu bewegen.

Der Zylinderdeckel 2 verfügt über einen angeformten Flansch 9 geringeren Durchmessers, welcher endseitig in das Zylindergehäuse 1 eingeschoben ist. Benachbart zur Druckkammer 7a ist in eine korrespondierende Nut am Flansch 9 ein Dichtring 10 eingelegt, um den Innenbereich des Druckmittelzylinders gegenüber der Atmosphäre abzudichten. Der Dichtring 10 kommt dementsprechend dichtend an der Innenwandung des Zylindergehäuses 1 zur Anlage. In Richtung der Außenstirnseite des Zylinderdeckels 2 hin axial benachbart ist eine Befestigungsnut angeordnet, welche aus zwei Teilnuten 11a, 11b gebildet ist. Die erste Teilnut 11a ist innenradial am Zylindergehäuse eingebracht, wogegen die korrespondierende, gegenüberliegende Teilnut 11b außenradial am Flansch 9 des Zylinderdeckels 2 eingebracht ist. Die so gebildete umlaufende Befestigungsnut dient der Aufnahme eines hierin unter Wahrung einer leichten Spielpassung eingeschobenen Wurmfederelements 12, um den Zylinderdeckel 2 am Zylindergehäuse 1 formschlüssig zu befestigen.

Zur Verdrehsicherung des Zylinderdeckels 2 gegenüber dem Zylindergehäuse 1 ist weiterhin eine Sicherungsschraube 13 vorgesehen, welche radial gerichtet in die Wandung des Zylindergehäuses 1 mittels einer hierin eingebrachten Gewindebohrung eingeschraubt ist. Die Sicherungsschraube 13 kommt in eine Umfangsnut 14 am Flansch 9 des Zylinderdeckels 2 zum Eingriff. Der Eingriff der Sicherungsschraube 13 erfolgt im Öffnungsbereich der Umfangsnut 14 zunächst frei, wogegen die Sicherungsschraube 13 bei einem weiteren Eindrehen in einen flankenseitig verengten Nutgrundbereich 15 materialverdrängend zum Eingriff kommt. Hierüber ist die Verdrehsicherung des Zylinderdeckels 2 nach vorheriger Wahl der Austrittsrichtung des Druckmittelanschlusses 8a am Zylinderdeckel 2 herstellbar.

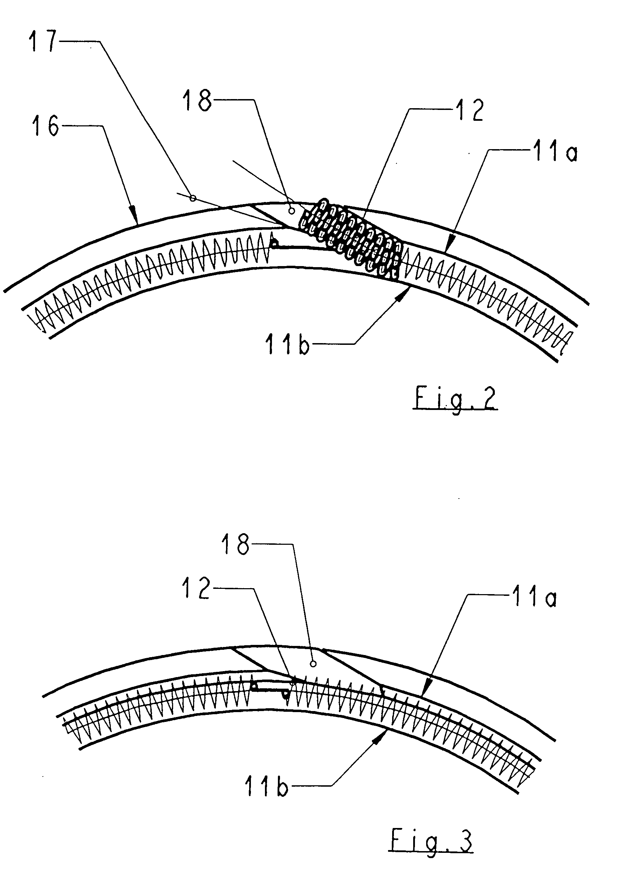

Aus der Detailansicht gemäß Fig. 2 geht die Montage des Wurmfederelements 12, welches hier nach Art einer Spiralfeder aus Federstahl ausgebildet ist, in die aus den beiden Teilnuten 11a und 11b gebildete Befestigungsnut hervor. Zum Einschieben des Wurmfederelements 12 ist eine von der Außenoberfläche 16 zur Befestigungsnut unter einem Winkel von 60° bezüglich einer Tangentiallinie 17 verlaufender Kanalabschnitt 18 vorgesehen. Die Länge des Wurmfederelements 12 ist geringfügig geringer als der Umfang der Befestigungsnut, so dass das Wurmfederelement 12 fast vollständig - wie gezeigt - entlang der Befestigungsnut verläuft.

Gemäß Fig. 3 federt das Wurmfederelement 12 im eingeschobenen Zustand aufgrund seiner Vorspannung derart ein, dass dieses sich an den gekrümmten Verlauf der Befestigungsnut anpasst. In dieser Lage ist es nicht mehr möglich, dass das Ende des Wurmfederelements 12 in den Kanalabschnitt 18 zurückgelangt, so dass allein aufgrund dieses Formschlusses eine wirkungsvolle Verliersicherung entsteht.

Die vorliegende Erfindung ist nicht allein auf das vorstehend beschriebene bevorzugte Ausführungsbeispiel beschränkt. Es sind auch eine Reihe von Abwandlungen hiervon denkbar, welche vom Schutzbereich der Ansprüche umfasst sind. So ist es beispielsweise auch möglich, dass das Wurmfederelement aus einem vollen Material hergestellt ist, sofern die erforderliche Festigkeit und die gewünschten Federeigenschaften vorliegen.

### Bezugszeichenliste

- 1: Zylindergehäuse
- 2: Zylinderdeckel
- 3: Kolben
- 4: Kolbenstange
- 5: Dichtring
- 6: Gewindeabschnitt
- 7: Druckkammer
- 8: Druckmittelanschluss
- 9: Flansch
- 10: Dichtring
- 11: Teilnut
- 12: Wurmfederelement
- 13: Sicherungsschraube
- 14: Umfangsnut
- 15: Nutgrundbereich
- 16: Außenoberfläche
- 17: Tangentiallinie
- 18: Kanalabschnitt

## Patentansprüche

1. Druckmittelzylinder zur Erzeugung einer mechanischen Kraft über eine Druckmittelbeaufschlagung eines in einem Zylindergehäuse (1) angeordneten Kolbens (3), von dem aus eine Kolbenstange (4) abgeht, die abgedichtet mindestens einen Zylinderdeckel (2) durchdringt, wobei zur formschlüssigen Befestigung am Zylindergehäuse (1) der mindestens eine Zylinderdeckel (2) eine Teilnut (11b) aufweist, die mit einer gegenüberliegenden Teilnut (11a) am Zylindergehäuse (1) unter Bildung einer umlaufenden Befestigungsnut korrespondiert, in welcher ein Wurmfederelement (12) eingeschoben ist,
**dadurch gekennzeichnet, dass** zum Einschieben des Wurmfederelements (12) ein von der Außenoberfläche (16) zur Befestigungsnut unter einem Winkel im Bereich zwischen 0° bis 90° bezüglich einer Tangentiallinie (17) verlaufender Kanalabschnitt (18) vorgesehen ist, so dass das Wurmfederelement (12) sich aufgrund seiner Vorspannung nach dem vollständigen Einschieben an den gekrümmten Verlauf der Befestigungsnut anpassend zurückfedert.

2. Druckmittelzylinder nach Anspruch 1,
**dadurch gekennzeichnet, dass** das Wurmfederelement (12) nach Art einer Spiralfeder aus Federstahl ausgebildet ist, deren Außendurchmesser an den kreisförmigen Querschnitt der Befestigungsnut unter Wahrung einer Spielpassung angepasst ist.

3. Druckmittelzylinder nach Anspruch 1,
**dadurch gekennzeichnet, dass** der Kanalabschnitt (18) unter einem Winkel von zirka 60° bezüglich der Tangentiallinie (17) verläuft.

4. Druckmittelzylinder nach Anspruch 1,
**dadurch gekennzeichnet, dass** die Öffnung des Kanalabschnitts (18) an der Außenoberfläche (16) mittels eines hieran angebrachten Abdeckelements verschlossen ist.

5. Druckmittelzylinder nach Anspruch 1,
**dadurch gekennzeichnet, dass** die Länge des Wurmfederelements (12) geringfügig geringer als der Umfang der Befestigungsnut ist, so dass das Wurmfederelement (12) fast vollständig entlang der Befestigungsnut verläuft, um die Belastbarkeit der formschlüssigen Verbindung zu maximieren.

6. Druckmittelzylinder nach Anspruch 1,
**dadurch gekennzeichnet, dass** der mindestens eine Zylinderdeckel (2) über einen angeformten Flansch (9) zumindest teilweise in das Zylindergehäuse (1) eingeschoben ist und außenradial einen zum Zylindergehäuse (1) hin abdichtenden Dichtring (10) aufweist, zu welchem in Richtung der Außenstimseite des Zylinderdeckels (2) hin axial benachbart die Befestigungsnut angeordnet ist.

7. Druckmittelzylinder nach einem der vorstehenden Ansprüche,
**dadurch gekennzeichnet, dass** zur Verdrehsicherung des Zylinderdeckels (2) gegenüber dem Zylindergehäuse (1) eine Sicherungsschraube (13) radial gerichtet in das Zylindergehäuse (1) eingeschraubt ist, die in eine Umfangsnut (14) im Flansch (9) des Zylinderdeckels (2) zum Eingriff kommt.

8. Druckmittelzylinder nach Anspruch 7,
**dadurch gekennzeichnet, dass** die Umfangsnut (14) in Richtung der Außenstirnseite des Zylinderdeckels (2) hin axial benachbart zur Befestigungsnut angeordnet ist.

9. Druckmittelzylinder nach Anspruch 7,
**dadurch gekennzeichnet, dass** der Eingriff der Sicherungsschraube (13) im Öffnungsbereich der Umfangsnut (14) zunächst frei erfolgt, wogegen die Sicherungsschraube (13) bei einem weiteren Eindrehen in einen flankenseitig verengten Nutgrundbereich (15) materialverdrängend zum Eingriff kommt.

10. Druckmittelzylinder nach einem der vorstehenden Ansprüche,
**dadurch gekennzeichnet, dass** das Zylindergehäuse (1) topfförmig ausgebildet ist und der einzige Zylinderdeckel (2) von der Kolbenstange (4) abgedichtet durchdrungen ist.
